# EUROPEAN PATENT SPECIFICATION

(11) **EP 3 560 800 B1**
(45) Date of publication and mention of the grant of the patent: **31.03.2021**
(21) Application number: 19170889.0
(22) Date of filing: 24.04.2019
(51) Int. Cl.: B62D 25/18, B62D 25/16

(54) **SPRAY SUPPRESSION DEVICE**
SPRÜHUNTERDRÜCKUNGSVORRICHTUNG
DISPOSITIF DE SUPPRESSION DE PULVÉRISATION

(30) Priority: 27.04.2018 GB 201806901
(43) Date of publication of application: 30.10.2019
(73) Proprietor: Egby, Andrew, London SW19 4SJ (GB)
(72) Inventor: Egby, Andrew, London SW19 4SJ (GB)
(74) Representative: Whitlock, Holly Elizabeth Ann

(56) References cited:
- GB-A- 2 050 272
- GB-A- 2 299 795
- JP-A- 2001 219 871
- US-A- 4 290 619
- US-A- 5 199 742
- US-A1- 2010 059 982
- US-A1- 2011 248 490

## Description

### BACKGROUND OF THE INVENTION

The invention relates to devices and a system for reducing water spray caused by pulverisation of water on a wet road surface that is thrown upwards by tyres of a vehicle in motion. The invention has particular relevance to large vehicles that require a spray suppression device/system based on the EU Directive (EU) 109/2011.

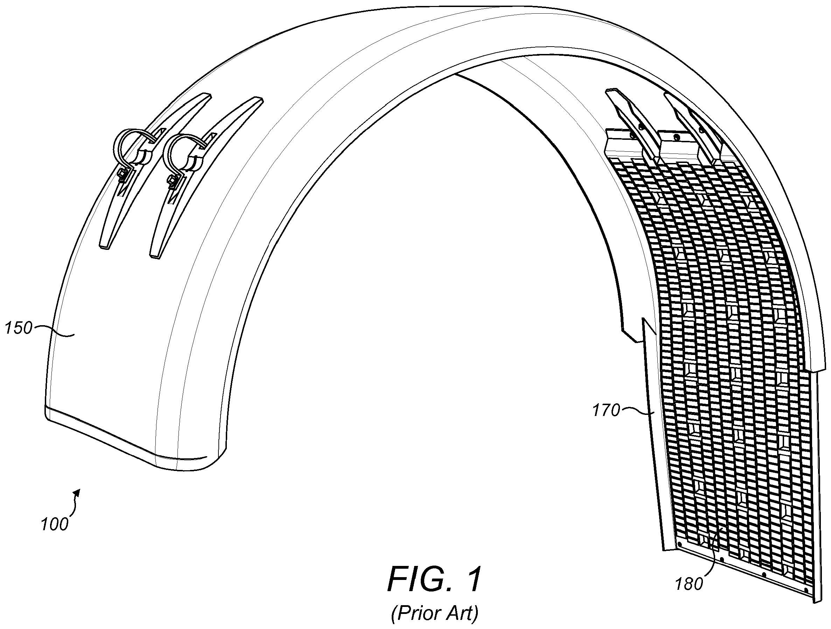

Prior art spray-suppression systems were introduced in 2011 in an attempt to combat the amount of water spray produced by large vehicles on wet roads. These systems generally comprise a mudguard and a rain flap, wherein at least the rain flap is made from a material that suppresses water spray thrown up by tyres. For example, FIG. 1 illustrates a prior art spray-suppression system 100, comprising a mud-flap 150 and rain flap 170. The surface 180 of the rain flap is manufactured to trap water spray and return the trapped spray to the road surface. US 4 290 619 A relates to another prior art device that relates to means for inhibiting the formation of spray behind a road vehicle when the latter is travelling in wet conditions. After the introduction of these spray-suppression systems, the visibility behind vehicles increased and in turn road safety improved.

### SUMMARY OF THE INVENTION

A problem with current prior art spray-suppression systems is that the root cause of the pulverisation of water has not been solved because the surface water remains on the road surface for subsequent vehicles to pulverise.

The present invention addresses the above problem of the prior art. In particular, aspects of the invention relate to devices and a system that are arranged to reduce surface water spray by capturing said surface water spray and re-directing said surface water spray away from the driving line of the tyres of said vehicle and pursuing vehicles.

The invention is especially applicable to large vehicles that require a spray suppression device/system based on the EU Directive (EU) 109/2011.

As a result of the invention the surface water spray caused by vehicles pulverising surface water on a road surface can be reduced.

Aspects of the invention are defined in the claims.

### BRIEF DESCRIPTION OF THE DRAWINGS

The present invention will now be described in detail with reference to the accompanying drawings, in which:
Figure 1 is a diagram illustrating a conventional spray-suppression system.
Figures 2A to 2C are diagrams illustrating perspective views of a water channelling not part of the present invention.
Figure 3A illustrates a known rain flap in use, and Figure 3B illustrates the known rain flap not part of the present invention.
Figures 4A to 4D are diagrams illustrating a profile, top, front and side view of a device for suppressing airborne spray according to embodiments of the present invention.

### DETAILED DESCRIPTION OF THE INVENTION

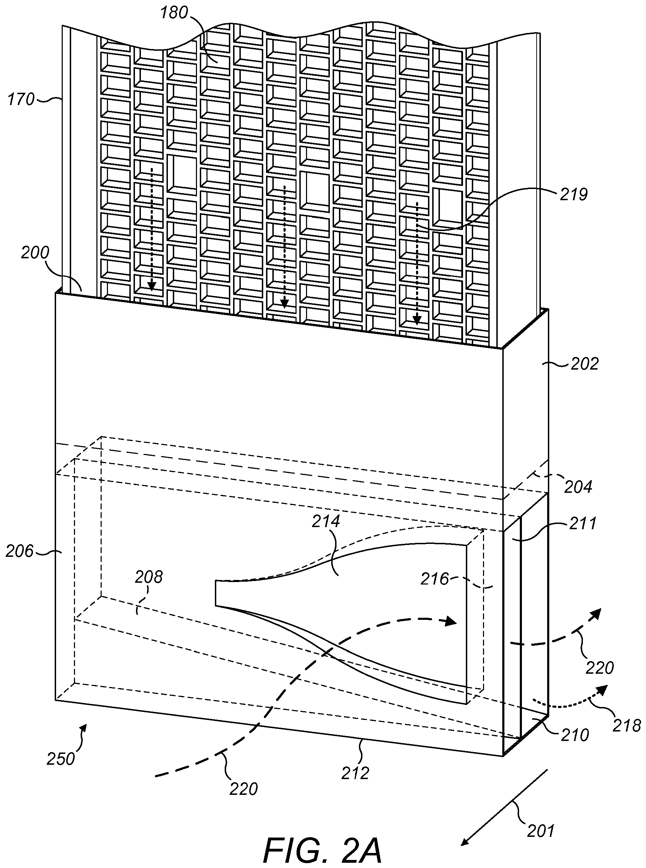

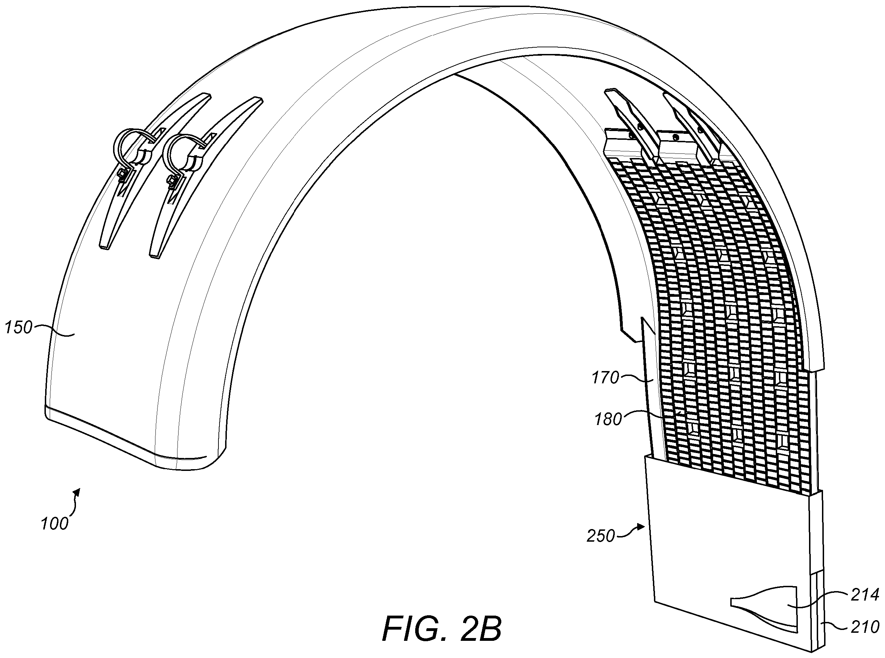

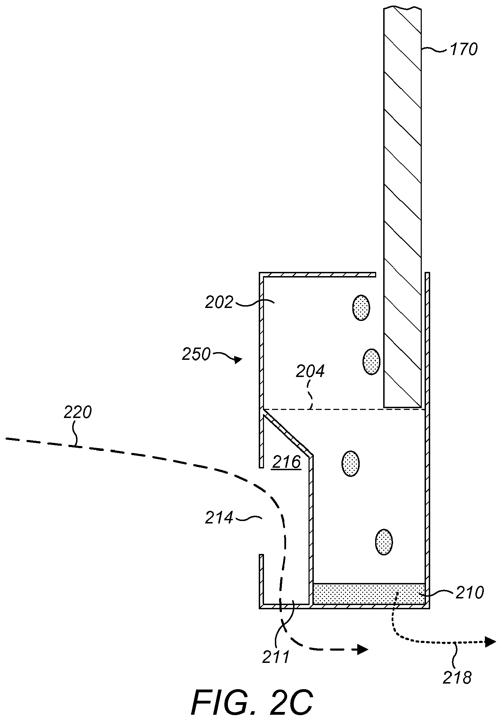

A first device not part of the invention will now be described with reference to Figures 2A and 2C.

Figure 2A provides a perspective view of a water channelling device 250 for use with a spray-suppression system, for example a rain flap 170 as described in Figure 1. Arrow 201 indicates a direction of travel of the water channelling device 250 when said water channelling device 250 is coupled to the rain flap 170 of a moving vehicle. In use, the water channelling device 250 is arranged to follow a drive line of a vehicle using said water channelling device 250.

The water suppressing means may be coupled to the support member so that they are arranged, in use, perpendicular to a road surface or arranged, in use, at an angle with respect to the road surface.

According to a further aspect, there is provided a system for suppressing spray from a moving vehicle. The system comprises a number of water suppressing means arranged at an angle with respect to a road surface, wherein ends of the water suppressing means are coupled to an edge cap that is arranged to collect and divert the collected water spray to a water outlet positioned away from a driving line of a vehicle.

According to a further aspect, there is provided a system for suppressing spray from a moving vehicle. The system comprises the water channelling device and the device for suppressing airborne spray.

Another aspect of the invention provides a device which uses differences in density and momentum to separate airborne water spray from the air as it passes through the device.

Another aspect of the invention provides a device which separates water out of the air whilst allowing air to flow, preferably continuously, through the device, thereby reducing drag.

### BRIEF DESCRIPTION OF THE DRAWINGS

By way of example, embodiments of the present invention will now be described in detail with reference to the accompanying drawings, in which:
Figure 1 is a diagram illustrating a conventional spray-suppression system.
Figures 2A to 2C are diagrams illustrating perspective views of a water channelling device in accordance with an embodiment of the present invention.

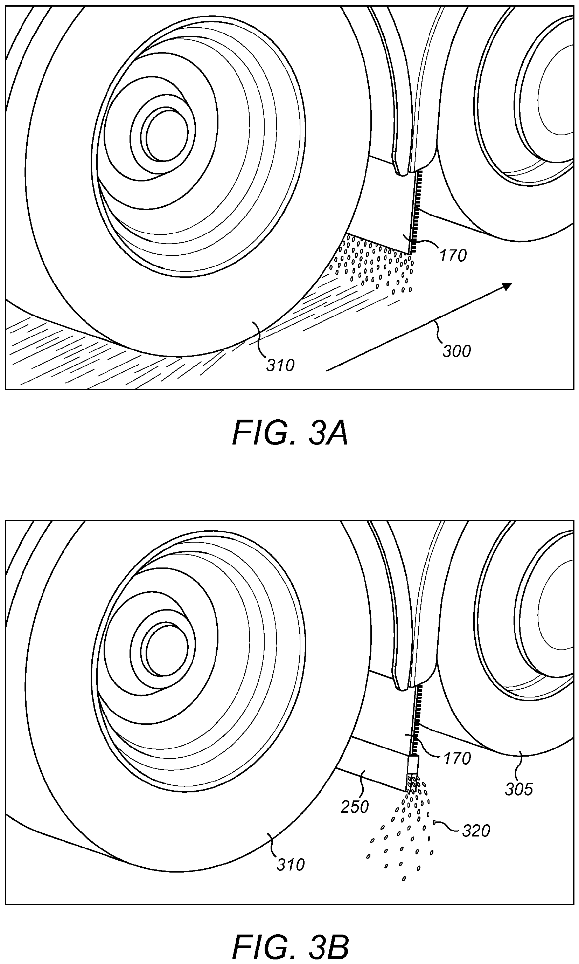

Figure 3A illustrates a known rain flap in use, and Figure 3B illustrates the known rain flap in combination with an embodiment of the present invention.

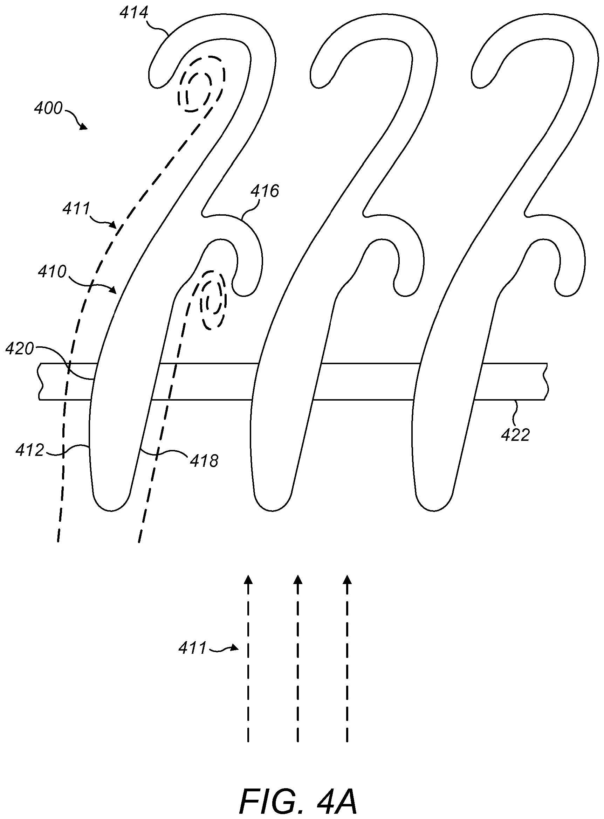

Figures 4A to 4D are diagrams illustrating a profile, front and side view of a device for suppressing airborne spray according to embodiments of the present invention.

### DETAILED DESCRIPTION OF THE INVENTION

A first embodiment of the invention will now be described with reference to Figures 2A and 2C.

Figure 2A provides a perspective view of a water channelling device 250 for use with a spray-suppression system, for example a rain flap 170 as described in Figure 1. Arrow 201 indicates a direction of travel of the water channelling device 250 when said water channelling device 250 is coupled to the rain flap 170 of a moving vehicle. In use, the water channelling device 250 is arranged to follow a drive line of a vehicle using said water channelling device 250.

The water channelling device 250 comprises an opening 200 at an upper portion 202 of the water channelling device (delimited by dashed line 204) that is arranged to accommodate a portion of the rain flap 170. In use, said portion of the rain flap 170 is positioned inside the upper portion 202 of the water channelling device and down to dashed line 204. The position of the dashed line 204 is merely for explanatory purposes and may be positioned above or below the current illustrated dashed line 204. The portion of the rain flap 170 inside the upper portion 202 is removably attached to the water channelling device 250 so that the water channelling device 250 remains attached to the rain flap 170 during use, i.e., whilst supressing water spray from a moving vehicle. The upper portion 202 of the water channelling device 250 is arranged to collect surface water spray from the rain flap 170 and direct the collected surface spray water to a lower portion 206 of the water channelling device 250.

The lower portion 206 of the water channelling device 250 comprises an inner channel 208 that is arranged to direct collected surface spray water to a water outlet 210, which is arranged at a side of the water channelling device 250. The inner channel 208 may be angled with respect to the base 212 of the water channelling device 250 so that any collected surface spray water is more efficiently channelled to the water outlet 210.

In an alternative embodiment, also not belonging to the present invention, the inner channel 208 may be used to store collected surface water spray and direct said collected surface water spray to a periphery of the water channelling device. This has an advantage of preventing the collected water from returning to the road surface so that the amount of water on the road surface is reduced. In such an example, the water outlet 210 would be sealed to prevent water escaping from the inner channel 208.

Referring again to Figure 2A, the lower portion 206 of the water channelling device further comprises an air vent 214 that is positioned proximal to the water outlet 210. The air vent 214 is arranged on a surface of the water channelling device which, in use, would receive a flow of air (or a jet of air depending on the speed of the vehicle) generated by movement of the vehicle utilising the rain flap 170. The air vent 214 provides an opening for air to flow through an air flow passage 216 and past the water outlet 210 via an air outlet 211. Arrow 218 represents the flow of water exiting the water outlet 210. Arrow 220 represents an air flow that passes through the air vent 214 and the air flow passage 216 and exits via the air outlet 211 (see also figure 2C) that is positioned proximal to the water outlet 210.

In use, i.e., when a vehicle is moving, surface spray water collected by the rain flap 170 is directed into the upper portion 202 of the water channelling device 250 (illustrated by arrows 219), wherein collected surface spray water is directed to the lower portion 206 of the water channelling device 250. The inner channel 208 is arranged to direct the collected surface spray water to the water outlet 210. The air flow represented by arrow 220 (see also figure 2C) will be at a higher pressure when entering the air vent compared to exiting the air outlet 211. Thus an air flow, which may approximate a jet of air at high vehicle speeds will pass through the air vent 214, the airflow passage and out of the air outlet 211 and past the water outlet 210, which results in the jet of air/flow of air entraining, and in some examples shielding, water that is exiting the water outlet 210. Thus the use of the air vent 214 results in water at the water outlet 210 being projected further away from the water outlet 210 than if the air vent 214 was not used. This has an advantage of directing the water further away from the driving line of the vehicle so that trailing tyres of the vehicle, and subsequent pursuing vehicles are less likely to pulverise the water re-deposited onto the road surface, as most vehicles follow a similar driving line.

Referring to Figures 3A and 3B, example implementations of the water channelling device 250 in use are illustrated. Referring to Figure 3A, a rain flap 170 is illustrated that is collecting surface water spray and depositing the collected water back onto the road surface. The arrow 300 indicates the direction of travel of the vehicle. It can be seen that the rain flap 170 is depositing water in a driving line of the tyres of the vehicle so that the water deposited by the rain flap 170 will be pulverised by the subsequent tyre 310 and tyres of pursuing vehicles following behind (not illustrated).

Referring to Figure 3B, the water channelling device 250 is illustrated in use with the rain flap 170. The water channelling device 250 collects the water usually deposited back onto the road surface in the driving line of the tyres, and re-directs the surface spray collected by the rain flap 170 towards the water outlet 210 of the water channelling device 250. Low pressure airflow that is generated around the tyre 305 of the vehicle due to the forward motion of the vehicle entrains the water exiting the water outlet 210 away from the subsequent tyre 310. Thus the water channelling device 250 reduces water that can be pulverised by the subsequent tyre 310 and thereby reducing surface spray and surface water that is in the driving line of the tyre 310. Addition of the air vent 214 (not shown) further increases the projection of water away from the drive line of the tyre 310 because the jet/flow of air passing the water outlet 210 further entrains water that is exiting the water outlet 210 and thus increases the distance the water is projected from the driving line of the tyre 310 and subsequent following vehicles.

It is envisaged that the water channelling device 250 may be coupled to each rain flap 170 of a vehicle, wherein the water outlets of the water channelling devices 250 can be positioned according to the direction of travel of the vehicle. For example, in the UK, the water outlet 210 may be positioned so that entrained water exits towards the kerb side of a road. Alternatively, water channelling devices on the kerb side may direct water to the kerb, and water channelling devices on the driver side may direct water to the driver side in order to keep the collected surface spray away from the driving line of the tyres of vehicles. The reverse may be applied for vehicles driving on the continent, for example Europe and America.

The water channelling device 250 discussed above may be used in conjunction with current spray-suppression systems, for example the rain flap 170. The water channelling device 250 may also be coupled to a mud guard of a vehicle to channel water and debris from the driving line of the vehicle. The water channelling device 250 may also be used in conjunction with the following exemplary embodiment that details a new device for suppressing airborne spray from a moving vehicle.

Referring to Figure 4A, related to the present invention, a top-down view of a device 400 for suppressing airborne spray from a moving vehicle is illustrated. Device 400 comprises one or more water suppressing means 410, wherein each water suppressing means 410 includes an elongate portion 412 and one or more curved portions 414, 416. Optionally, the elongate portion 412 may approximate a wing profile and comprise a planar surface 418 and a curved surface 420, wherein the curved surface 420 is arranged to direct low pressure air to the curved portion 414 such that the water suppressing means 410 flexes in a direction of the curved surface 420 when sufficient air 411 flows past the curved surface 420. In another optional embodiment the elongate portion 412 comprises a second planar portion in place of the curved portion 420. This may reduce the flexing of the water suppressing means 410 if this is not required.

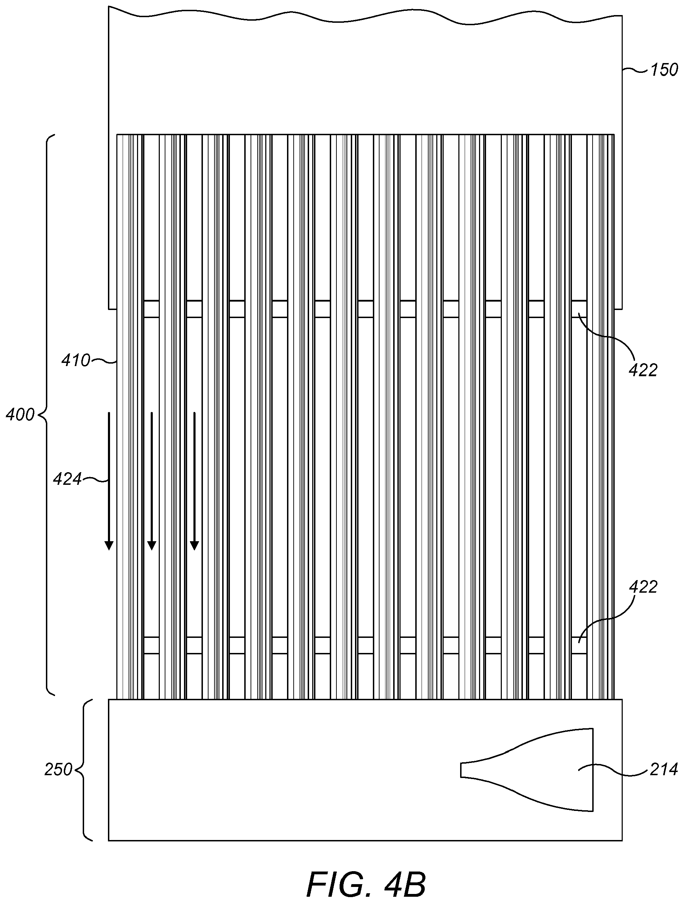

A number of the water suppressing means 410 may be positioned vertically with respect to a horizontal support member 422 (i.e., perpendicular to a road surface when in use) to form the device 400 for suppressing airborne spray, i.e., a spray-suppression system, which may approximate the operation of a rain flap such as the rain flap 170 from Figure 1. The horizontal support member 422 is arranged to fix the water suppressing means 410 into position such that air flow 410 cannot pass directly through the water suppressing means 410 without coming into contact with a surface of the water suppressing means 410. In use, the device 400 directs air flow 411 along the surface of the elongate portions 412 and to the curved portions 414 and optionally the curved portions 416. The curved portions 414 and 416 cause a low pressure vortex at the inner surface of the curved portions 414 and 416, which results in surface water spray that is travelling with the flow of air to be channelled downwards to a lower portion of the water suppressing means 410 (see figure 4B). The separation of surface water spray from the flow of air occurs due to the differences in density and momentum of the surface water spray and the flow of air. Due to the differences in density and momentum, a low pressure vortex can be used to enable separation of airborne water spray from the air as it passes through the device.

The positioning of the water suppressing means 410 on the horizontal support member 422 is designed to allow air 411 to flow past the water suppressing means 410, whilst capturing surface water spray travelling with the air 410 that has been pulverised by the moving vehicle. In contrast to existing spray-suppression systems, the device 400 has a relatively lower drag coefficient as air 411 can still flow through the device 400, i.e., between the water suppressing means 410. The use of a horizontal support member 422 is not essential, and the support member 422 may be positioned at any angle that enables the water suppressing means 410 to be coupled to the support member 422 so that the water suppressing means 410 are arranged perpendicular to a road surface when in use.

Referring to Figure 4B, a front view (air facing surface) of the device 400 comprising a number of water suppressing means 410 is illustrated. In this example, the device 400 is illustrated in combination with a mud flap 150, for example the mud flap 150 illustrated in Figure 1. Thus in this example, the device 400 is approximating the rain flap 170 from Figure 1. Optionally, the device 400 can also be used in combination with the water channelling device 250.

In use, pulverised water in the form of surface water spray will be transported by flowing air towards the device 400, wherein air flows around the water suppressing means 410 and forms low pressure vortices at the curved portions 414 and 416. Water spray in the low pressure vortices is directed down the water suppressing means 410 in the direction of arrows 424 and towards the road surface, or in the present example into the water channelling device 250.

As the speed of the vehicle increases, the air flow incident onto the device 400 also increases. In examples where the water suppressing means 410 comprise elongate members approximating a wing profile, the water suppressing means 410 flex in a direction of the curved surface 420 (see figure 4A), which moves the water channelling device 250 further from the driving line of the tyres of the vehicle so that water exiting the water channelling device 250 will be directed further from the driving line of the vehicle, which reduces water available to be pulverised by following tyres/vehicles and thus reducing surface water spray. It is noted that if this embodiment is used in conjunction with the air vent 214 then the water exiting the water channelling device 250 will be directed even further from the drive line of the vehicle.

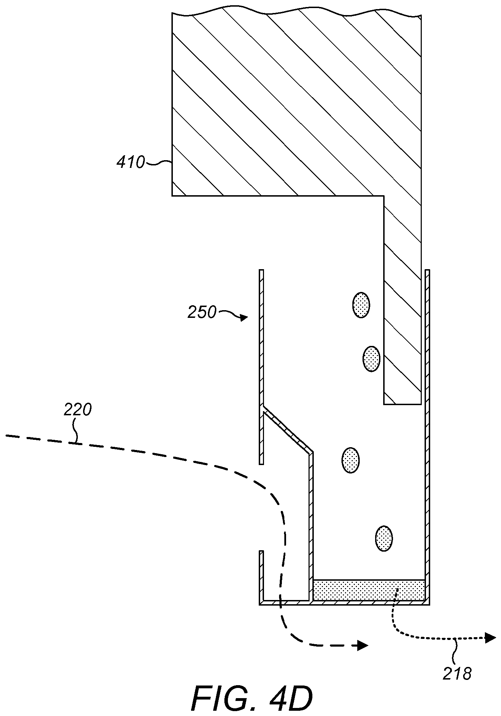

In an example, the water suppressing means 410 may have a depth of approximately 60mm from the elongate portion 412 to the curved portion 414, and the water channelling device 250 may have a depth of approximately 40mm so that, in use, the water suppressing means 410 protrude from the water channelling device 250 by approximately 20mm. The width, depth and height of the device 400, and the water channelling device 250 is dependent on the mud guard/rain flap of the intended vehicle. Figure 4D illustrates this preferred embodiment in a profile view.

In another example, the water suppressing means 410 may have a depth that is similar to the depth of the water channelling device 250 so that the water suppressing means 410 can slot inside an upper portion 402 of the water channelling device 250. For example, the depth of the water suppressing means 410 and the water channelling device 250 may both be 40mm. As discussed above, the width, depth and height of the device 400 and the water channelling device 250 is dependent on the mud flap/rain flap of the intended vehicle.

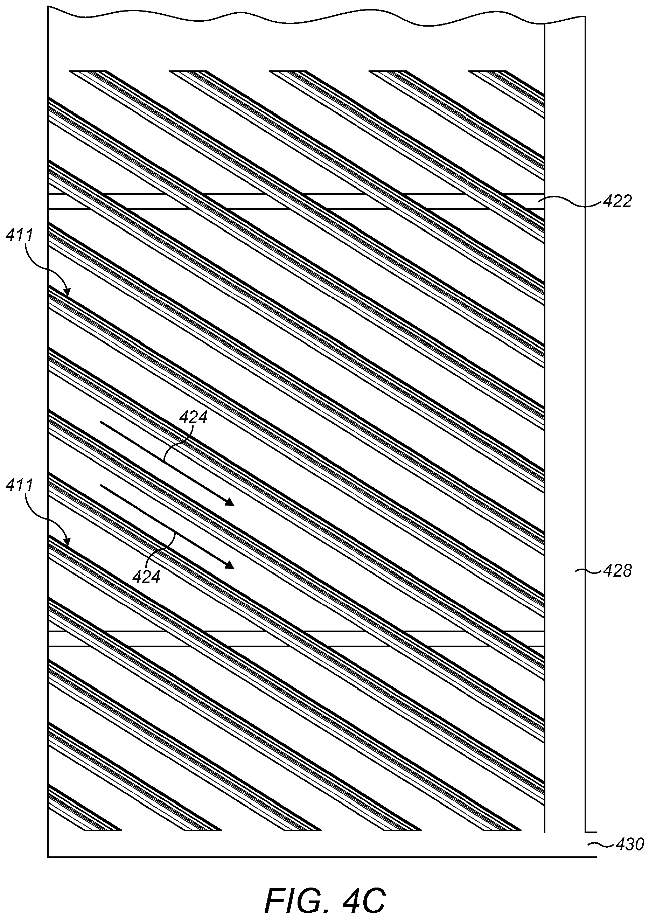

FIG. 4C illustrates an alternative example of the device 400 illustrated in FIG. 4B. In this alternative example, the water suppressing means 410 are arranged at an angle with respect to the horizontal support members 422, with the curved surface 420 (see figure 4A) of the water suppressing means 410 being positioned uppermost so that pulverised water is collected by curved portions 414 and channelled away from the driving line of the vehicle without the need for the water collection device 250. For example, water spray is directed down the water suppressing means 410 in the direction of arrows 424 and towards an edge cap 428, which is arranged to divert the water spray towards a water outlet 430. Thus the angled nature of the water suppressing means has an advantage of directing collected water spray away from a drive line of a vehicle, wherein the collected water spray can be diverted via the edge cap 428 to a water outlet 430 positioned away from a drive line of a vehicle. In the above example, the relative orientation of the angled water suppressing means has been described with respect to a horizontal support member 422. Thus support members 422 do not have to be horizontal, and can be at any angle that enables coupling of the water suppressing means so that, in use, the water suppressing means are angled with respect to a road surface.

The above embodiments of the invention depicted in figures 4a to 4d relate to devices and a system for reducing associated water spray caused by pulverisation of water thrown upwards by the tyres of a moving vehicle on a wet road surface. Embodiments have been described in combination with a spray-suppression system that may incorporate a rain flap. Embodiments of the invention are also applicable to standard mud flaps or mud guards that may not comprise any spray suppression.

## Claims

1. A device (400) for suppressing airborne spray from a moving vehicle, said device comprising:
a water suppressing means (410), said water suppressing means (410) comprising:
an elongate portion (412), wherein the elongate portion (412) comprises a planar surface (418) and a curved surface (420), wherein low pressure air is arranged to flow past the curved surface (420) and to cause the elongate portion (412) to flex in a direction of the low pressure air flow; and
a first curved portion (414), wherein an end of the first curved portion (414) is coupled to an end of the elongate portion (412), and wherein the elongate portion (412) is arranged to direct flowing air to the first curved portion (414) to generate a vortex of air in the region of the first curved portion (414).

2. The device of claim 1, wherein the vortex of air generated in the region of the first curved portion (414) is so as to direct surface water spray in the air flow towards a road surface.

3. The device of claim 1 or 2, wherein an inner surface of the first curved portion (414) and the vortex of air are arranged to capture water spray from the flowing air.

4. The device of any one of claims 1 to 3, further comprising a second curved portion (416) coupled to the elongate portion, wherein the second curved portion is arranged on an opposing side to the first curved portion (414) and arranged to receive flowing air to generate a second vortex of air in the region of the second curved portion (416).

5. A device comprising a support member (422) and a number of devices of claim 1 coupled to said support member (422), wherein the number of devices of claim 1 are arranged, in use, perpendicular to a road surface.

6. The device of claim 5, wherein the number of devices of claim1 are spaced apart from each other on the support member (422) such that flowing air can flow between said number of devices.

7. The device of claim 5, wherein the number of devices of claim 1 are arranged, in use, at an angle with respect to a road surface such that collected water is directed away from a driving line of a vehicle.

8. The device of claim 7, further comprising an edge cap (428), wherein ends of the number of devices of claim 1 are coupled to the edge cap (428), wherein the edge cap is arranged to collect water from the number of devices of claim 1 and divert said collected water to a water outlet (430).

9. A system for suppressing spray from a moving vehicle, said system comprising: a water channelling device (250) for use with a rain flap (170), said water channelling device (250) comprising:
water collecting means arranged to collect water output from the rain flap (170) and arranged to channel said collected water to a periphery of the water channelling device;
a water outlet (210) positioned at the periphery of the water channelling device;
an air vent (214) positioned in the water channelling device, wherein the air vent (214) is positioned proximal to the water outlet (210); and
an air outlet (211) coupled to the air vent (214) via an air flow passage (216), wherein the air vent (214), the air flow passage (216) and the air outlet (211) are arranged to direct a flow of air from the air vent (214) to the air outlet (211) at an air pressure sufficient to draw collected water from the water outlet (210); and
the device for suppressing airborne spray from any preceding claim.

## Patentansprüche

1. Vorrichtung (400) zum Unterdrücken von schwebendem Sprühnebel von einem fahrenden Fahrzeug, wobei die Vorrichtung Folgendes umfasst:
ein Wasserunterdrückungsmittel (410), wobei das Wasserunterdrückungsmittel (410) Folgendes umfasst:
einen langgestreckten Abschnitt (412), wobei der langgestreckte Abschnitt (412) eine ebene Oberfläche (418) und eine gekrümmte Oberfläche (420) umfasst, wobei Niederdruckluft dazu angeordnet ist, an der gekrümmten Oberfläche (420) vorbei zu strömen und zu bewirken, dass sich der langgestreckte Abschnitt (412) in einer Richtung des Niederdruckluftstroms biegt; und
einen ersten gekrümmten Abschnitt (414), wobei ein Ende des ersten gekrümmten Abschnitts (414) an ein Ende des langgestreckten Abschnitts (412) gekoppelt ist und wobei der langgestreckte Abschnitt (412) dazu angeordnet ist, strömende Luft zu dem ersten gekrümmten Abschnitt (414) zu lenken, um einen Luftwirbel in dem Bereich des ersten gekrümmten Abschnitts (414) zu erzeugen.

2. Vorrichtung nach Anspruch 1, wobei der in dem Bereich des ersten gekrümmten Abschnitts (414) erzeugte Luftwirbel derart ist, dass er Oberflächenwasser-Sprühnebel in dem Luftstrom in Richtung einer Fahrbahnoberfläche lenkt.

3. Vorrichtung nach Anspruch 1 oder 2, wobei eine innere Oberfläche des ersten gekrümmten Abschnitts (414) und der Luftwirbel dazu angeordnet sind, Wassersprühnebel aus der strömenden Luft aufzufangen.

4. Vorrichtung nach einem der Ansprüche 1 bis 3, ferner umfassend einen an den langgestreckten Abschnitt gekoppelten, zweiten gekrümmten Abschnitt (416), wobei der zweite gekrümmte Abschnitt auf einer dem ersten gekrümmten Abschnitt (414) gegenüberliegenden Seite angeordnet ist und dazu angeordnet ist, strömende Luft aufzunehmen, um einen zweiten Luftwirbel in dem Bereich des zweiten gekrümmten Abschnitts (416) zu erzeugen.

5. Vorrichtung, umfassend ein Halteelement (422) und mehrere an das Halteelement (422) gekoppelte Vorrichtungen nach Anspruch 1, wobei die mehreren Vorrichtungen nach Anspruch 1 im Gebrauch senkrecht zu einer Fahrbahnoberfläche angeordnet sind.

6. Vorrichtung nach Anspruch 5, wobei die mehreren Vorrichtungen nach Anspruch 1 an dem Halteelement (422) derart voneinander beabstandet sind, dass strömende Luft zwischen den mehreren Vorrichtungen strömen kann.

7. Vorrichtung nach Anspruch 5, wobei die mehreren Vorrichtungen nach Anspruch 1 im Gebrauch derart unter einem Winkel in Bezug auf eine Fahrbahnoberfläche angeordnet sind, dass gesammeltes Wasser von einer Fahrtlinie eines Fahrzeugs weg gelenkt wird.

8. Vorrichtung nach Anspruch 7, ferner umfassend eine Kantenabdeckung (428), wobei Enden der mehreren Vorrichtungen nach Anspruch 1 an die Kantenabdeckung (428) gekoppelt sind, wobei die Kantenabdeckung dazu angeordnet ist, Wasser von den mehreren Vorrichtungen nach Anspruch 1 zu sammeln und das gesammelte Wasser zu einem Wasserauslass (430) umzuleiten.

9. System zum Unterdrücken von Sprühnebel von einem fahrenden Fahrzeug, wobei das System Folgendes umfasst: eine Wasserleitungsvorrichtung (250) zur Verwendung mit einem Spritzlappen (170), wobei die Wasserleitungsvorrichtung (250) Folgendes umfasst:
Wassersammelmittel, die dazu angeordnet sind, von dem Spritzlappen (170) ausgegebenes Wasser zu sammeln, und dazu angeordnet sind, das gesammelte Wasser zu einem Rand der Wasserleitungsvorrichtung zu leiten;
einen Wasserauslass (210), der an dem Rand der Wasserleitungsvorrichtung positioniert ist;
eine Lüftungsöffnung (214), die in der Wasserleitungsvorrichtung positioniert ist, wobei die Lüftungsöffnung (214) nah bei dem Wasserauslass (210) positioniert ist; und
einen Luftauslass (211), der über einen Luftströmungskanal (216) an die Lüftungsöffnung (214) gekoppelt ist, wobei die Lüftungsöffnung (214), der Luftströmungskanal (216) und der Luftauslass (211) dazu angeordnet sind, einen Strom von Luft mit einem zum Saugen von gesammeltem Wasser aus dem Wasserauslass (210) ausreichenden Luftdruck von der Lüftungsöffnung (214) zu dem Luftauslass (211) zu lenken; und
die Vorrichtung zum Unterdrücken von schwebendem Sprühnebel nach einem der vorangehenden Ansprüche.

## Revendications

1. Dispositif (400) servant à supprimer des projections en suspension dans l'air en provenance d'un véhicule mobile, ledit dispositif comportant :
un moyen de suppression d'eau (410), ledit moyen de suppression d'eau (410) comportant :
une partie allongée (412), dans lequel la partie allongée (412) comporte une surface plane (418) et une surface courbe (420), dans lequel de l'air à basse pression est agencé pour s'écouler devant la surface courbe (420) et pour amener la partie allongée (412) à fléchir dans une direction de l'écoulement d'air à basse pression ; et
une première partie courbe (414), dans lequel une extrémité de la première partie courbe (414) est accouplée à une extrémité de la partie allongée (412), et dans lequel la partie allongée (412) est agencée pour diriger l'air qui s'écoule jusqu'à la première partie courbe (414) pour générer un tourbillon d'air dans la région de la première partie courbe (414).

2. Dispositif selon la revendication 1, dans lequel le tourbillon d'air généré dans la région de la première partie courbe (414) est tel qu'il dirige toute projection d'eau de surface dans l'écoulement d'air vers une surface de roulement.

3. Dispositif selon la revendication 1 ou la revendication 2, dans lequel une surface intérieure de la première partie courbe (414) et le tourbillon d'air sont agencés pour capturer toute projection d'eau en provenance de l'air qui s'écoule.

4. Dispositif selon l'une quelconque des revendications 1 à 3, comportant par ailleurs une deuxième partie courbe (416) accouplée à la partie allongée, dans lequel la deuxième partie courbe est agencée sur un côté opposé par rapport à la première partie courbe (414) et agencée pour recevoir l'air qui s'écoule pour générer un deuxième tourbillon d'air dans la région de la deuxième partie courbe (416).

5. Dispositif comportant une élément de support (422) et un nombre de dispositifs selon la revendication 1 accouplés audit élément de support (422), dans lequel les dispositifs du nombre de dispositifs selon la revendication 1 sont agencés, lors de l'utilisation, de manière perpendiculaire par rapport à une surface de roulement.

6. Dispositif selon la revendication 5, dans lequel les dispositifs du nombre de dispositifs selon la revendication 1 sont espacés les uns des autres sur l'élément de support (422) de telle sorte que l'air qui s'écoule peut s'écouler entre ledit nombre de dispositifs.

7. Dispositif selon la revendication 5, dans lequel les dispositifs du nombre de dispositifs selon la revendication 1 sont agencés, lors de l'utilisation, selon un angle par rapport à une surface de roulement de telle sorte que l'eau collectée est dirigée à distance d'une voie de conduite d'un véhicule.

8. Dispositif selon la revendication 7, comportant par ailleurs un couvercle de bord (428), dans lequel les extrémités du nombre de dispositifs selon la revendication 1 sont accouplées au couvercle de bord (428), dans lequel le couvercle de bord est agencé à des fins de collecte d'eau en provenance du nombre de dispositifs selon la revendication 1 et pour dévier ladite eau collectée vers une sortie d'eau (430).

9. Système servant à supprimer des projections en provenance d'un véhicule mobile, ledit système comportant : un dispositif de canalisation d'eau (250) à des fins d'utilisation avec une bavette anti-pluie (170), ledit dispositif de canalisation d'eau (250) comportant :
un moyen de collecte d'eau agencé pour collecter l'eau qui sort en provenance de la bavette anti-pluie (170) et agencé pour canaliser ladite eau collectée vers une périphérie du dispositif de canalisation d'eau ;
une sortie d'eau (210) positionnée au niveau de la périphérie du dispositif de canalisation d'eau ;
un évent d'air (214) positionné dans le dispositif de canalisation d'eau, dans lequel l'évent d'air (214) est positionné de manière proximale par rapport à la sortie d'eau (210) ; et
une sortie d'air (211) accouplée à l'évent d'air (214) par le biais d'une passage d'écoulement d'air (216), dans lequel l'évent d'air (214), le passage d'écoulement d'air (216) et la sortie d'air (211) sont agencés pour diriger un écoulement d'air en provenance de l'évent d'air (214) jusqu'à la sortie d'air (211) à une pression d'air suffisante pour aspirer toute eau collectée en provenance de la sortie d'air (210) ; et
le dispositif servant à supprimer des projections en suspension dans l'air selon l'une quelconque des revendications précédentes.
